# EUROPEAN PATENT APPLICATION

(11) **EP 0 794 632 A2**
(43) Date of publication of application: **10.09.1997**
(21) Application number: 96308949.5
(22) Date of filing: 10.12.1996
(51) Int. Cl.: H04L 1/06

(54) **Receiver using antenna diversity and error detection for reception of packets transmitted over a wireless communication medium**

(30) Priority: 03.01.1996 US 582569
(71) Applicant: LUCENT TECHNOLOGIES INC., Murray Hill, New Jersey 07974-0636 (US)
(72) Inventor: Weerackody, Vijitha, Watchung, NJ 07060 (US)
(74) Representative: Buckley, Christopher Simon Thirsk

(57) **Abstract**

The present invention is a cost effective receiver (5) using antenna diversity. Several illustrative embodiments are provided. In one embodiment, the receiver (5) comprises a first antenna (1) for receiving an information packet, an error detection decoder (35) for determining if there are any errors in the information packet, a switch (10) for switching from the first antenna (1) to a second antenna (2), and a controller (40) for controlling the switch to switch from the first antenna to the second antenna if an unacceptable number of errors are detected in the information packet.

## Description

### FIELD OF THE INVENTION

The present invention relates generally to the field of wireless communications, and particularly to an improved receiver using antenna diversity for the reception of information packets transmitted over a wireless communication medium.

### BACKGROUND OF THE INVENTION

Information packets are susceptible to errors when transmitted over a wireless communication medium. Employing antenna diversity at the receiver is one method of reducing the number of information packets that are received with an unacceptable number of errors, as determined for a particular wireless communication service.

Current receivers employing antenna diversity include two or more antennas and are programmed to determine the most suitable antenna channel for receiving information packets at any given time by continuously measuring the strength of the incoming signal at each antenna. As channel conditions change, so too does the antenna that is used to receive the incoming information packets.

There is a problem with these current receivers. To measure the strength of the incoming signal these receivers employ an analog measuring device. The analog measuring device increases the cost of the receiver. In addition, in order to obtain the full benefit of the antenna diversity, the receiver must continuously adjust the signal strength threshold level to make sure that it is not set too high, in which case the same antenna is always used, or set too low, in which case the receiver is switching antennas too often. The additional circuitry needed for this dynamic thresholding further adds to the cost of the receiver.

Thus, there is a need for a more cost effective receiver using antenna diversity for receiving information packets transmitted over a wireless communication medium.

### SUMMARY OF THE INVENTION

The present invention provides a cost effective receiver using antenna diversity for receiving information packets transmitted over a wireless communication medium. The present invention does not require an analog measuring device or the dynamic thresholding circuitry needed to best use that device. Rather than use additional components to determine the channel condition associated with a particular antenna, and thus whether to switch antennas, the receiver of the present invention takes advantage of the information already being provided by the error detection circuitry in current receivers.

In a first illustrative embodiment of the present invention, the receiver comprises a first antenna for receiving an information packet, an error detection decoder for determining if there are any errors in the information packet, a switch for switching from the first antenna to a second antenna, and a controller for controlling the switch to switch from the first antenna to the second antenna if an unacceptable number of errors is detected in the information packet.

In a second illustrative embodiment of the present invention, the receiver comprises at least two antennas for simultaneously receiving an information packet, a memory for storing the information packet received by each of the antennas, an error detection decoder for determining if there are any errors in the stored information packets, and a controller for selecting a first one of the stored information packets having less than an unacceptable number of errors for further processing.

In a third illustrative embodiment of the present invention, the second embodiment further includes a combiner for combining at least two of the stored information packets in a situation where all of the stored information packets have an unacceptable number of errors, in which case the controller will select the combined information packet for further processing if it has less than an unacceptable number of errors.

### BRIEF DESCRIPTION OF THE DRAWINGS

Fig. 1 is a block diagram of a first illustrative embodiment of the present invention;
Fig. 2A is a block diagram of a second illustrative embodiment of the present invention; and
Fig. 2B is an abbreviated block diagram of a third illustrative embodiment of the present invention.

### DETAILED DESCRIPTION OF THE INVENTION

For clarity of explanation, the illustrative embodiments of the present invention are presented as comprising individual functional blocks. The functions these blocks represent may be provided through the use of either shared or dedicated hardware, including, but not limited to hardware capable of executing software. The illustrative embodiments may comprise digital signal processor (DSP) hardware, such as the AT&T DSP16 or DSP32C, and software performing the operations discussed below. Very large scale integration (VLSI) hardware embodiments of the present invention, as well as hybrid DSP/VLSI embodiments, may also be provided.

### A First Illustrative Embodiment

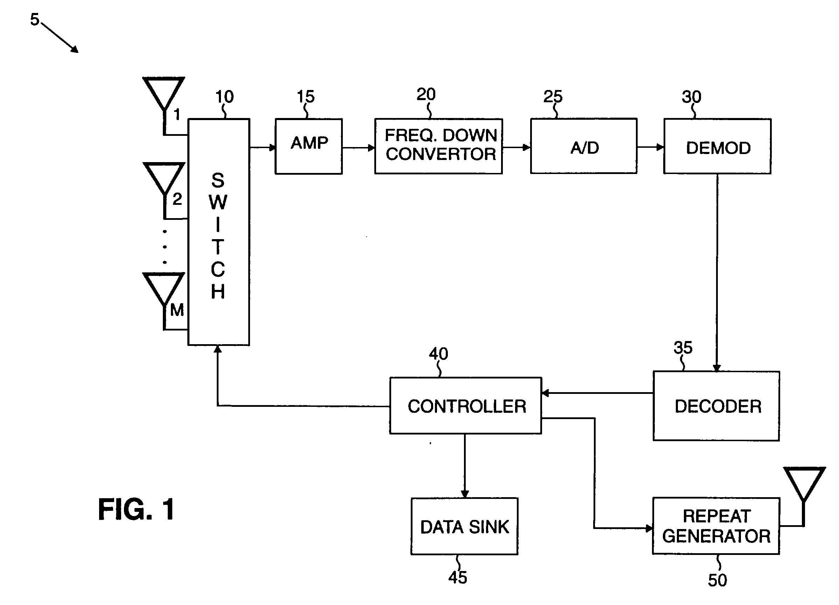

Fig. 1 shows a block diagram of a first illustrative embodiment of the present invention. Fig. 1 shows a receiver 5 employing M antennas for antenna diversity in the reception of information packets transmitted over a wireless communication medium, and thereby reducing the number of information packets that are received with an unacceptable number of errors.

The receiver further includes a switch 10 coupled to the antennas for directing a radio frequency (RF) signal received from one of the antennas to the processing channel of the receiver. The switch 10 may be a hardware and/or software switch. The information packet to be processed is typically encoded in an intermediate frequency (IF) signal called a baseband signal which is carried by the RF signal. The encoding method is preferably 4-DPSK modulation.

The receiver further includes a low noise amplifier 15 for amplifying the RF signal to a level suitable for processing. The amplified RF signal is then applied to a frequency down convertor 20 which removes the RF signal leaving only the baseband signal for further processing. The baseband signal is sampled by an analog-to-digital (A/D) convertor 25. The digital representation of the sampled signal is then demodulated by a demodulator 30 which is programmed to recover the information packet from the baseband signal using a suitable demodulation technique.

The recovered information packet is then checked for errors by an error detection decoder 35. Prior to transmission, the information packet is encoded with one or more suitable error detection codes enabling the error detection decoder 35 to determine whether there are any transmission errors present in the information packet and the actual number of any such errors. Where one error would be unacceptable there would be no need to determine the actual number of errors -- the fact that there are any errors at all would implicitly mean that there is an unacceptable number of errors. As explained below, this information is used by the receiver of the present invention to determine whether the current antenna channel is "unsatisfactory." Thus, there is no need for an analog measuring device and its associated dynamic thresholding circuitry to make that determination. Hence, the receiver of the present invention is a more cost effective receiver.

The controller 40 is programmed to determine whether there is an unacceptable number of errors. If there is less than an unacceptable number of errors, the information packet is delivered to the data sink for further processing and the next information packet is received using the same antenna. On the other hand, if there is unacceptable number of errors, the channel is considered unsatisfactory, and the next information packet, or the retransmission of the same information packet, is received using another one of the M antennas. The controller 40 in this case, sends a control signal to switch 10 causing the switch to select another one of the M antennas for further reception.

The repeat generator 50 responds to signalling from the controller 40 by transmitting either a request for transmission of the next information packet in the case of a satisfactory channel, or a request for retransmission of the same information packet in the case of an unsatisfactory channel. In an ARQ protocol, the request for transmission of the next information packet is implicit in the transmission of a positive acknowledgement, and the request for retransmission of the same information packet is implicit in the transmission of a negative acknowledgement.

### A Second Illustrative Embodiment

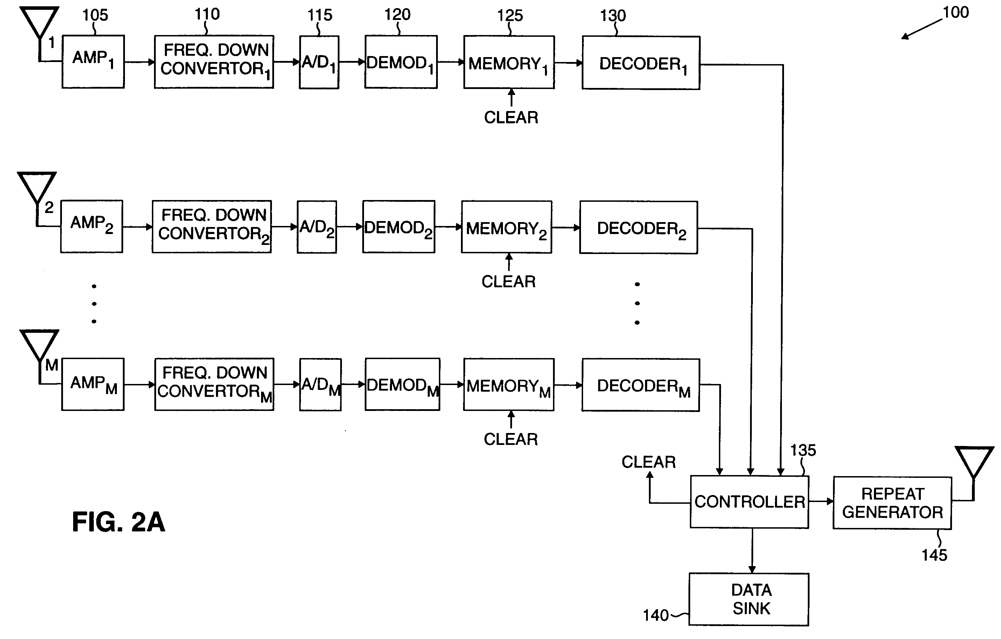

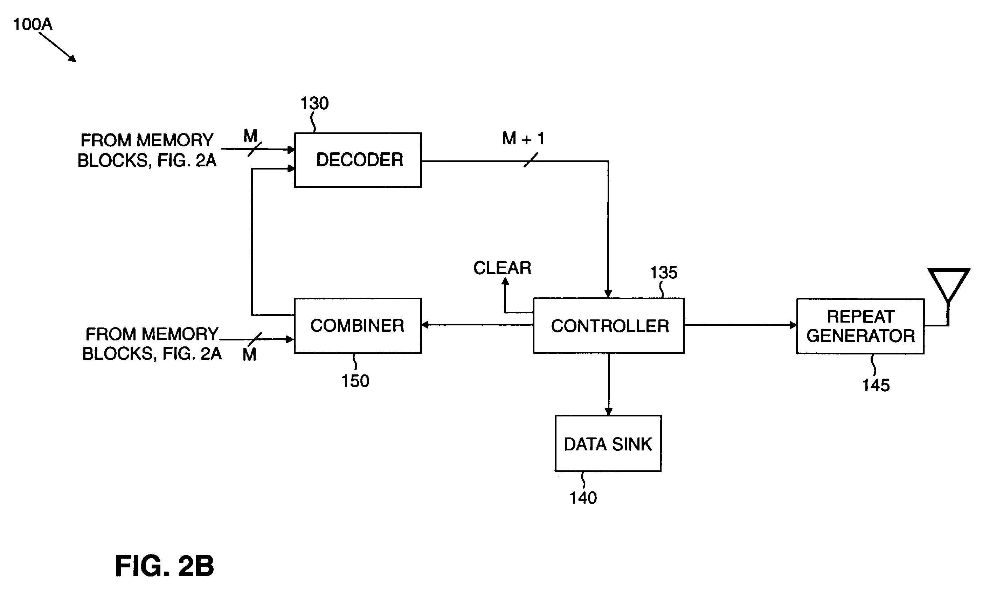

Fig. 2A shows a block diagram of a second illustrative embodiment of the present invention. Fig. 2A also shows a receiver 100 having M antennas. In this embodiment, the RF signal carrying the information packet is simultaneously received by all M antennas rather than just one, as was the case in the first illustrative embodiment. In this embodiment, preferably, the first one of the information packets found to have less than an unacceptable number of errors is accepted and delivered to the data sink for further processing.

Receiver 100 further includes an amplifier 105, frequency down convertor 110, A/D convertor 115, demodulator 120, error detection decoder 130, and a repeat generator 145 which perform the same functions as stated above for the first illustrative embodiment, this time though for processing the information packet received by each of M antennas. In addition, receiver 100 further includes a memory 125 for storing the M information packets.

Controller 135 is preferably programmed to sequentially examine the number of errors in the information packets detected by the error detection decoder 130 and select the first one found having less than an unacceptable number of errors for delivery to the data sink 140 for further processing.

Consider the simple case of two antennas, and assume that one error is considered an unacceptable number. The sampled signal received by each of the M antennas, i.e., the information packet, is stored in memory 125. The information packet from the first antenna is checked by the error detection decoder 130 for any errors under control of controller 135. If no errors are found, the information packet is delivered to the data sink 140 by controller 135, memory 125 is cleared, and the receiver 100 is ready for the next information packet. If, on the other hand, errors are found, the controller 135 instructs the error detection decoder 135 to check the information packet from the second antenna for errors. The process continues for the information packets received by each of the M antennas.

If all of the information packets are found to have errors, then the controller 135 may be programmed to clear memory 125, request retransmission of the information packet, and start the process over again for the retransmitted information packet. Alternatively, a third illustrative embodiment of the present invention may be employed.

### A Third Illustrative Embodiment

Fig. 2B shows a third illustrative embodiment of the present invention. This embodiment represents a modification of the second illustrative embodiment and thus should be viewed in conjunction with Fig. 2A. Fig. 2B shows a receiver 100A with a code combiner 150 for combining information packets using any suitable combining technique known to those of ordinary skill in the art, including, for example, co-phasing, co-phasing and weighting, and any suitable maximum likelihood scheme, for example, see "Code Combining -- A Maximum-Likelihood Decoding Approach for Combining An Arbitrary Number of Noisy Packets," published in the IEEE Transactions On Communications, at Vol. Com-33, No. 5, May 1985, which is incorporated herein by reference.

In this third illustrative embodiment, the controller 135 is further programmed to cause two or more of the information packets stored in memory to be combined in combiner 150 in a situation where all of the information packets from the M antennas have an unacceptable number of errors. The combined information packet is delivered to the detector 130 for error detection. If less than an unacceptable number of errors are detected in the combined information packet by detector 130, then the combined information packet is delivered to the data sink for further processing as required by the particular application, the memory is cleared, and the repeat generator 145 sends a positive acknowledgement to the transmitter in an ARQ protocol. The receiver 100A is then ready for the next packet. If, on the other hand, an unacceptable number of errors are detected in the combined information packet, the memory may be cleared and the process may be repeated, or the signals in the memory may be retained and the process repeated, for either the next packet or the retransmission of the same packet.

Various changes and modifications of the present invention will be readily apparent to those of ordinary skill in the art, and all such changes and modifications are considered to fall within the scope of the invention as defined by the appended claims. In particular, the present invention may also be used, for example, for the reception of JPEG images.

## Claims

1. A receiver for receiving information packets, comprising:
a first antenna for receiving an information packet;
an error detection decoder for determining if there are any errors in the information packet;
a switch for switching from the first antenna to a second antenna; and
a controller for controlling the switch to switch from the first antenna to the second antenna if an unacceptable number of errors is detected in the information packet.

2. The receiver of claim 1, wherein the receiver further includes a repeat generator for transmitting a request for retransmission of the information packet if an unacceptable number of errors is detected in the information packet.

3. The receiver of claim 1, wherein the request for retransmission in an ARQ protocol is a negative acknowledgement transmitted over a feedback channel.

4. The receiver of claim 1, wherein the switch is a hardware switch.

5. The receiver of claim 1, wherein the switch is software switch.

6. A receiver for receiving information packets, comprising:
at least two antennas for simultaneously receiving an information packet;
a memory for storing the information packet received by each of the antennas;
an error detection decoder for determining if there are any errors in the stored information packets; and
a controller for selecting a stored information packet having less than an unacceptable number of errors for further processing.

7. The receiver of claim 6, wherein the controller sequentially selects a first one of the stored information packets having less than an unacceptable number errors for further processing.

8. The receiver of claim 6, wherein the receiver further comprises a repeat generator for transmitting a request for retransmission of the information packet if an unacceptable number of errors is detected in all of the stored information packets.

9. The receiver of claim 6, further comprising a combiner for combining at least two of the stored information packets if the stored information packets have an unacceptable number of errors, wherein the controller selects the combined information packet for further processing if it has less than an unacceptable number of errors.

10. The receiver of claim 9, wherein the receiver further comprises a repeat generator for transmitting a request for retransmission of the information packet if an unacceptable number of errors is detected in the combined information packet.

11. A method of receiving information packets, comprising the steps of:
receiving an information packet at a first antenna;
determining if there are any errors in the information packet;
switching from the first antenna to a second antenna if there is an unacceptable number of errors in the information packet.

12. The method of claim 11, further comprising the step of transmitting a request for retransmission of the information packet if there is an unacceptable number of errors in the information packet.

13. A method of receiving information packets, comprising the steps of:
simultaneously receiving an information packet at least two antennas;
storing the information packet received by each of the antennas;
determining if there are any errors in the stored information packets; and
selecting a stored information packet having less than an unacceptable number of errors for further processing.

14. The method of claim 13, wherein the step of selecting comprises sequentially selecting a first one of the information packets having less than an unacceptable number errors.

15. The method of claim 13, further comprising the step of transmitting a request for retransmission of the information packet if an unacceptable number of errors is detected in the stored information packets.

16. The method of claim 13, further comprising the steps of combining at least two of the stored information packets if the stored information packets have an unacceptable number of errors, and selecting the combined information packet for further processing if it has less than an unacceptable number of errors.

17. The receiver of claim 16, wherein the receiver further comprises a repeat generator for transmitting a request for retransmission of the information packet if an unacceptable number of errors is detected in the combined information packet.
